# EUROPEAN PATENT SPECIFICATION

(11) **EP 1 747 364 B1**
(45) Date of publication and mention of the grant of the patent: **24.09.2008**
(21) Application number: 05739443.9
(22) Date of filing: 18.05.2005
(51) Int. Cl.: F02B 39/00, F02B 37/10, F02B 39/10

(54) **MOTOR-ASSISTED TURBO CHARGER FOR AN INTERNAL COMBUSTION ENGINE**
MOTORUNTERSTÜTZTER TURBOLADER FÜR VERBRENNUNGSMOTOR
TURBOCOMPRESSEUR ASSISTE PAR MOTEUR POUR MOTEUR A COMBUSTION INTERNE

(30) Priority: 19.05.2004 JP 2004149460; 20.05.2004 JP 2004150064
(43) Date of publication of application: 31.01.2007
(73) Proprietor: Toyota Jidosha Kabushiki Kaisha, Toyota-shi, Aichi-ken, 471-8571 (JP)
(72) Inventor: KITADA, Takayoshi c/o Toyota Jidosha Kabushiki Kaisha, Toyota-shi Aichi-ken 471-8571 (JP)
(74) Representative: TBK-Patent
(86) International application number: PCT/IB2005/001346
(87) International publication number: WO 2005/113961

(56) References cited:
- WO-A-02/50408
- DE-A1- 19 518 317
- US-A- 5 904 471

## Description

### BACKGROUND OF THE INVENTION

### 1. Field of the Invention

The invention relates to a motor-assisted turbo charger for an internal combustion engine, and more particularly to such a motor-assisted turbo charger including a cooling apparatus for cooling an assist motor and an inverter provided in said turbo charger.

### 2. Description of the Related Art

A known turbo charger for an internal combustion engine includes a turbine that is driven by exhaust gas of the engine and a compressor that is driven by the turbine to compress intake air. Among such turbo chargers, Japanese laid-opened patent application No. JP- 05-256155 provides a turbo charger having an assist motor for driving a compressor of the turbo charger. In this turbo charger, the assist motor is cooled by high-pressure air blown from a nozzle. Also, Japanese laid-opened patent application No. 2001-173591 recites a cooling apparatus for cooling such an assist motor of a turbo charger using coolant. Further, Japanese laid-opened patent application No. 2001-272135 recites a heat pump apparatus that is driven by an internal combustion engine and a motor. In this system, the engine and motor are cooled by coolant supplied via separate coolant passages.

As in such related art references, various cooling apparatus have been used to prevent overheat of the assist motor. However, some cooling means should be also provided to cool an inverter that is used to apply power to the assist motor because it also generates much heat during operation. DE 19 518 317 discloses a cooling system for a motor-assisted turbocharger which cools both motor and inverter by the same coolant flow.

As is widely known, overheat of an inverter may damage or destroy some elements thereof, whilst overheat of a motor may make its coil seized up. Also, limit temperatures of the motor and the inverter (i.e., temperatures above which the motor and the inverter may be overheated) are different in many cases. More specifically, the limit temperature of the inverter is typically lower than that of the motor. However, since it is often the case that such limit temperatures of the inverter and the motor are close to the temperature that a typical coolant used to cool an internal combustion engine may reach during cooling operation, incorporating a cooling apparatus for the inverter and the assist motor into an engine cooling system is difficult because it will result in a low heat exchange efficiency.

Meanwhile, intake air compression by the turbo charger is not always needed during engine operation, and furthermore the turbo charger basically can operate without aid of the assist motor (i.e., the motor does not need to operate continuously). Thus, before the temperature of the motor exceeds its limit temperature, power application to the motor may be stopped temporarily.

### SUMMARY OF THE INVENTION

In view of the above problem, it is an object of the invention to provide a cooling apparatus for a motor-assisted turbo charger which is well balanced between its performance and production cost.

A first aspect of the invention relates to a motor-assisted turbo charger for an internal combustion engine, including a compressor for compressing intake air; a motor for driving the compressor; an inverter for applying power to the motor; and a cooling apparatus for cooling the motor and the inverter. The cooling apparatus activates a first cooling mode in which one of the motor and the inverter is cooled and a second cooling mode in which the other or both of the motor and the inverter is cooled.

In the foregoing motor-assisted turbo charger, the cooling apparatus may include a coolant passage which extends through the motor and the inverter and in which a coolant is circulated, and the cooling apparatus may activate the first cooling mode by establishing a first coolant path in which the coolant is circulated to the one of the inverter and the motor and may activate the second cooling mode by establishing a second coolant path in which the coolant is circulated to the other or both of the motor and the inverter.

In the foregoing motor-assisted turbo charger, the one of the motor and the inverter may be the motor, and the other of the motor and the inverter may be the inverter.

In the foregoing motor-assisted turbo charger, the cooling apparatus may include a pump that is provided on the coolant passage to enable the circulation of the coolant and a radiator that is provided on the coolant passage to cool the coolant, and the first coolant path may be a path that causes the coolant to be circulated from the pump to the inverter, and to the radiator while bypassing the motor, and the second coolant path may be a path that causes the coolant to be circulated from the pump to the inverter, to the motor, and to the radiator.

In the foregoing motor-assisted turbo charger, the cooling apparatus may switch between the first cooling mode and the second cooling mode based on an inverter temperature that represents or correlates with a temperature of the inverter.

In the foregoing motor-assisted turbo charger, the cooling apparatus may include a coolant temperature sensor that is provided on the coolant passage downstream of a coolant outlet of the inverter and detects a temperature of the coolant, and the inverter temperature may include the temperature detected by the coolant temperature sensor.

In the foregoing motor-assisted turbo charger, the cooling apparatus may continue to operate after the internal combustion engine has been stopped if the inverter temperature is higher than a reference inverter temperature, maintaining the first cooling mode until the inverter temperature decreases below the reference inverter temperature.

In the foregoing motor-assisted turbo charger, the cooling apparatus may switch between the first cooling mode and the second cooling mode based on a motor temperature that represents or correlates with a temperature of the motor.

In the foregoing motor-assisted turbo charger, the cooling apparatus may include a motor temperature sensor that is provided in or in the vicinity of the motor and detects a temperature of the motor, and the motor temperature may include the temperature detected by the coolant temperature sensor.

In the foregoing motor-assisted turbo charger, the cooling apparatus may continue to operate after the internal combustion engine has been stopped if the motor temperature is higher than a reference motor temperature, maintaining the second cooling mode until the motor temperature decreases below the reference motor temperature.

Thus, according to the motor-assisted turbo charger described above, the cooling apparatus is adapted to selectively cool the motor or the inverter according to given conditions. For example, it is possible to control the cooling operation of the cooling apparatus with respect to four control regions each defined based on whether the motor temperature is higher than the reference motor temperature and whether the inverter temperature is higher than the reference inverter temperature, so that the cooling operation will be made more suitable for each thermal condition.

Also, as described above, the cooling apparatus may be adapted to switch between the first coolant path that causes the coolant to be circulated from the pump to the inverter, and to the radiator while bypassing the motor and the second coolant path that causes the coolant to be circulated from the pump to the inverter, to the motor, and to the radiator. Thus, for example, in the case where higher priority should be given to cooling the inverter over cooling the motor and therefore the temperature of the inverter is to be maintained below a reference inverter temperature and the temperature of the motor under a reference motor temperature set higher than the reference inverter temperature, the cooling apparatus may be adapted to establish the second coolant path in a normal state so that the coolant simply circulates from the pump to the inverter, the motor, and the radiator, and to change over to the first coolant path to bypass the motor in response to excessive increase in the inverter temperature, so that the coolant can maintain sufficient cooling capacity for cooling the inverter.

Further, in the foregoing motor-assisted turbo charger, the power application from the inverter to the motor may be stopped in response to a temperature of the motor exceeding a predetermined level.

In the foregoing motor-assisted turbo charger, the power application from the inverter to the motor may be limited in response to a temperature of the inverter exceeding a predetermined level.

In the motor-assisted turbo charger, the assist by the motor is not essential. So, the power application to the motor may be stopped in response to its temperature exceeding the particular level and this will prevent overheat of the motor more reliably. Also, even when the temperature of the motor is lower than the particular level, if the power application to the motor is stopped in response to the temperature of the inverter exceeding the particular level, overheat of the inverter can be prevented more reliably.

Further, in the foregoing motor-assisted turbo charger, the cooling apparatus may include a valve that is provided on the coolant passage, and the cooling apparatus may switch between the first cooling path and the second cooling path using the valve.

In the foregoing motor-assisted turbo charger, the radiator may include an electric fan that operates as the pump operates.

In this case, the radiator can be cooled down more reliably using the wind produced by the electric fan even when natural wind is not sufficient.

In the foregoing motor-assisted turbo charger, the cooling apparatus may include a coolant passage which extends through the motor and the inverter and in which coolant is circulated.

In the foregoing motor-assisted turbo charger, the motor may be located downstream of the inverter on the coolant passage.

In the foregoing motor-assisted turbo charger, the cooling apparatus may include a valve provided on the coolant passage between the motor and the inverter.

In the foregoing motor-assisted turbo charger, the valve may have a first valve position to cause the coolant to be circulated thorough one of the motor and the inverter, and a second valve position to cause the coolant to be circulated through the other or both of the motor and the inverter.

In the foregoing motor-assisted turbo charger, the coolant passage may include a bypass passage for bypassing one of the motor and the inverter.

### BRIEF DESCRIPTION OF THE DRAWINGS

The foregoing and/or further objects, features and advantages of the invention will become more apparent from the following description of exemplary embodiments with reference to the accompanying drawings, in which like numerals are used to represent like elements and wherein:
FIG 1 is a view schematically showing the configuration of a cooling apparatus of a motor-assisted turbo charger according to a first exemplary embodiment of the invention;
FIG. 2 is a graph representing four control regions each corresponding to a particular cooling mode of the cooling apparatus;
FIG 3 is a view schematically showing the configuration of a cooling apparatus of a motor-assisted turbo charger according to a second exemplary embodiment of the invention;
FIG 4 is a table illustrating the operation state of a three-way valve and an assist motor of the turbo charger of the second exemplary embodiment in each control region shown in FIG 3; and
FIG 5 is a flowchart showing a control routine for controlling the cooling apparatus in the second exemplary embodiment.

### DETAILED DESCRIPTION OF THE EXEMPLARY EMBODIMENTS

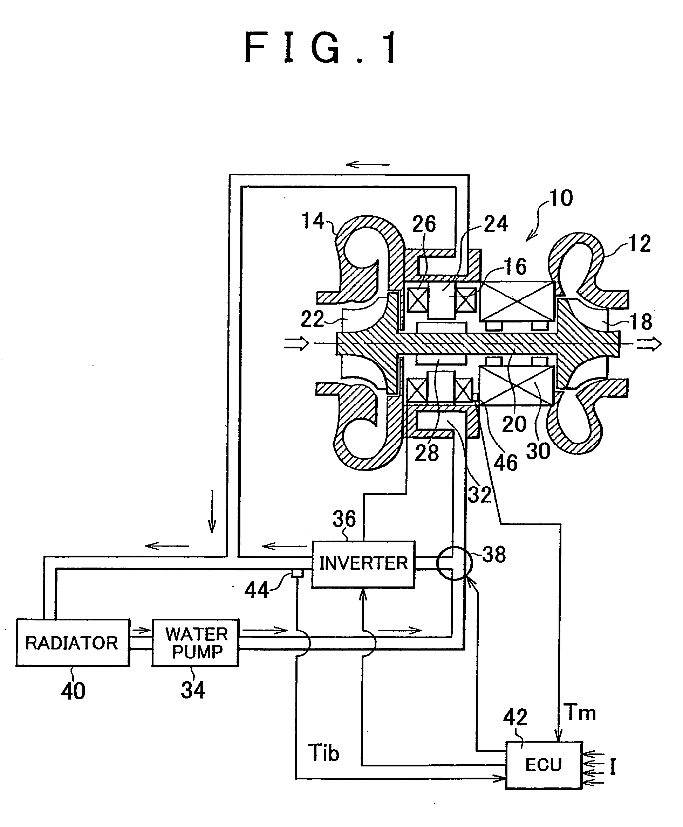

FIG 1 is a view schematically showing the configuration of a cooling apparatus of a motor-assisted turbo charger 10 according to a first exemplary embodiment of the invention, which is a water cooling type cooling apparatus. The turbo charger 10 includes a turbine 12, a compressor 14, and a motor 16. A rotor 18 of the turbine 12 is connected via a shaft 20 supported by a bearing 30 to a rotor 22 of the compressor 14. Thus, as the turbine 12 is driven by exhaust gas of the internal combustion engine, the compressor is driven by the turbine 12 to compress intake air. The motor 16 includes a stator 24 and a coil 26 provided thereon. When an inverter 36 energizes the coil 26 using power from a battery, not shown, driving force is exerted to a motor rotor 28 on the shaft 20. Thus, the motor 16 also drives the compressor 14.

The cooling apparatus includes a coolant passage 32 which extends through the motor 16 and the inverter 36. In the motor 16, a portion of the coolant passage 32 is formed around the stator 24 and the coil 26. A water pump 34 is provided on the coolant passage 32 to circulate coolant therein. A three-way valve 38 is provided on the coolant passage 32, which switches the circulation path of the coolant between a path for cooling both the inverter 36 and the motor 16, a path for cooling the inverter 36 only, and a path for cooling the motor 16 only. The coolant is cooled at a radiator 40 through head discharge and then returns into the coolant inlet of the water pump 34.

An electronic vehicle control unit (ECU) 42 including, but not limited to, a microcomputer device is provided which controls the three-way valve 38 as part of the overall vehicle operation control. The ECU 42 receives signals from various sensors, not shown, which detect engine speed, vehicle speed, throttle angle (corresponding to the depression of the accelerator pedal), brake fluid pressure (corresponding to the depression of the brake pedal), and other operation amounts (such sensor signals are collectively indicated as "information I" in the drawings). In addition, the ECU 42 receives signals from a temperature sensor 44 for detecting the coolant temperature at the coolant outlet of the inverter 36 which will be referred to as "inverter outlet temperature Tib", and signals from a temperature sensor 46 for detecting the temperature of the motor 16 which will be referred to as "motor temperature Tm".

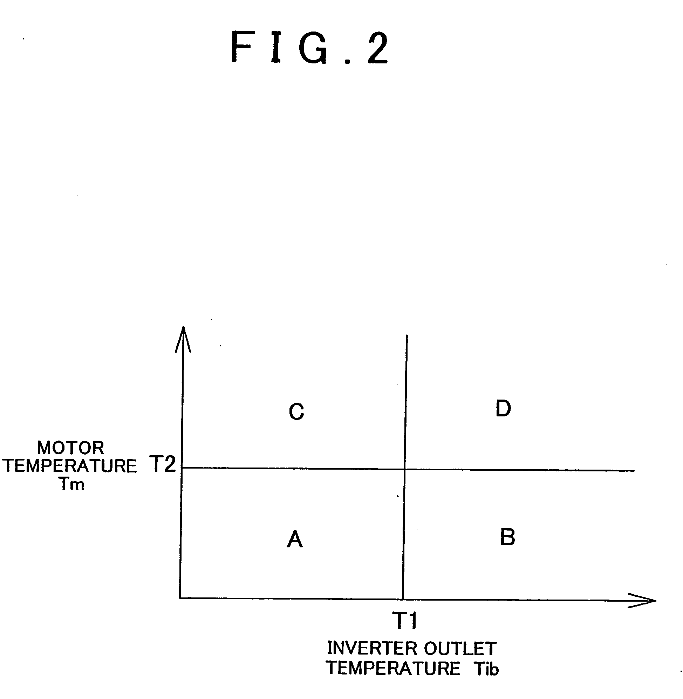

The ECU 42 controls the three-way valve 38 by controlling its power application in accordance with the detected inverter outlet temperature Tib and motor temperature Tm. FIG.2 is a graph representing control regions A, B, C, and D of the cooling control by the ECU 42. The ECU 42 executes a corresponding cooling control in each control region by switching the coolant circulation path among those to cool the motor 16 only, the inverter 36 only, and both of them.

Referring to FIG. 2, T2 represents a threshold temperature for the inverter outlet temperature Tib which is set to a value suitable for preventing overheat of the elements of the inverter 36, and T2 represents a threshold temperature for the motor temperature Tm which is set to a value suitable for preventing overheat of the coil 26 of the motor 16. In the region B in which the motor temperature Tm is lower than the threshold temperature T2 but the inverter outlet temperature Tib is higher than the threshold temperature T1, the ECU 42 switches the three-way valve 38 such that the coolant will flow to the inverter 36 only. In the region C in which the motor temperature Tm is higher than the threshold temperature T2 and the inverter outlet temperature Tib is lower than the threshold temperature T1, the ECU 42 switches the three-way valve 38 such that the coolant will flow to the motor 16 only. In the region D in which the motor temperature Tm is higher than the threshold temperature T2 and the inverter outlet temperature Tib is higher than the threshold temperature T1, the ECU 42 switches the three-way valve 38 such that the coolant will flow to both the motor 16 and the inverter 36. Here, note that power application to the motor 16 may be stopped in the regions C and D which is possible since the driving assist by the motor 16 is not essential as aforementioned.

As mentioned above, the different cooling modes for the regions A, B, C, and D are realized by selectively cooling the motor 16, the inverter 36, or both of them. However, it is often the case that such motor and inverter have different limit temperatures (i.e., temperatures above which they may be overheated). More specifically, the limit temperature of the motor is typically higher than that of the inverter. Moreover, as mentioned above, when the temperature of the motor 16 increases significantly, its power application may be stopped for protection. In view of these factors, higher priority can be given to cooling the inverter 36 over cooling the motor 16, and such cooling operation is accomplished in a motor-assisted turbo charger according to a second exemplary embodiment of this invention, which will hereinafter be described.

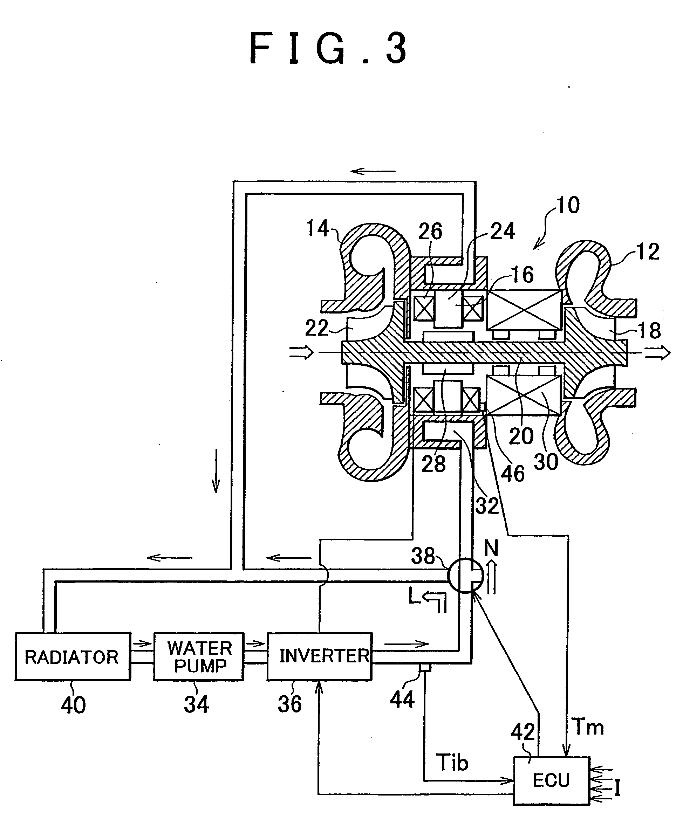

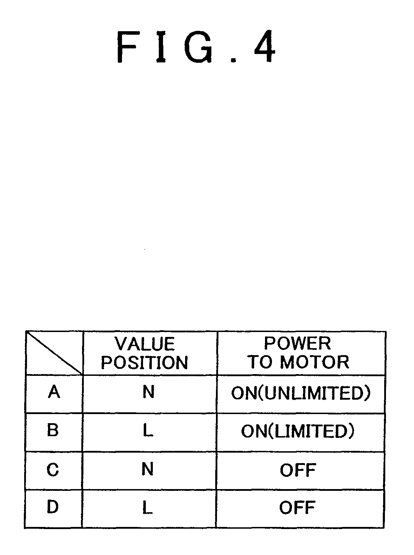

FIG. 3 is a view schematically showing the configuration of a cooling apparatus of a motor-assisted turbo charger according to the second exemplary embodiment of the invention. The same elements as those in the first exemplary embodiment are designated by the same reference numerals in FIG. 3 and their explanation will be omitted to avoid redundancy. Referring to FIG. 3, the motor 16 is located downstream of the inverter 36 on the coolant passage 32 and the three-way valve 38 is located between the motor 16 and the inverter 36. Further, the coolant passage 32 includes a bypass passage between the three-way valve 38 and the radiator 40 which is used to bypass the motor 16 under given conditions. The ECU 42 controls the three-way valve 38 and the motor 16 with respect to the control regions A, B, C, and D as illustrated in the table of FIG. 4, respectively.

Referring to FIG. 4, in the region A in which the motor temperature Tm and the inverter outlet temperature Tib are lower than the threshold temperatures T1 and T2, the three way valve 38 is set to "N" position so as to cause the coolant to flow from the inverter 36 to the motor 16. At this time, power application from the inverter 36 to the motor 16 may be continued without limiting power to the motor. Namely, at this time, power is supplied to the motor 16 as needed to assist the turbo charge operation.

In the region B in which the motor temperature Tm is lower than the threshold temperature T2 and the inverter outlet temperature Tib is higher than T1, the three-way valve 38 is set to "L" position so that the coolant bypasses the motor 16. At this time, power application from the inverter 36 to the motor 16 may be continued but power to the motor 16 is limited according to related thermal conditions.

In the region C in which the motor temperature Tm is higher than the threshold temperature T2 and the inverter outlet temperature Tib is lower than the threshold temperature T1, the three-way valve 38 is set to the N position and power application from the inverter 36 to the motor 16 is stopped. In this case, the motor 16 will be quickly cooled owing to the stopped power application to the motor 16 and the coolant circulated from the inverter 36 which is substantially under no operation load.

In the region D in which the motor temperature Tm is higher than the threshold temperature T2 and the inverter outlet temperature Tib is higher than the threshold temperature T1, the three-way valve 38 is set to the L position to bypass the motor 16 and power application from the inverter 36 to the motor 16 is stopped.

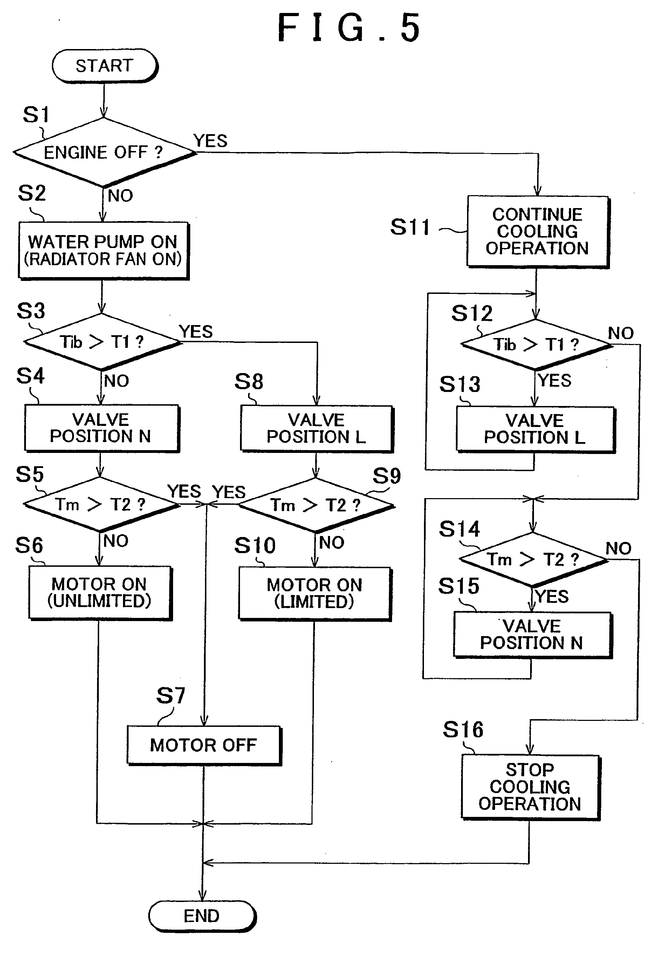

FIG. 5 shows one exemplary routine that is executed by the ECU 42 to realize the above-described cooling operation with respect to the control regions A, B, C, and D. Referring to FIG. 5, the ECU 42 first determines in step 1 whether the engine has just been turned off (e.g., when the ignition switch of the vehicle has been turned off). If "NO", the ECU 42 proceeds to step 2 and starts or continues to operate the water pump 34 (and a cooling fan of the radiator 40 if provided).

Subsequently, the ECU 42 determines in step 3 whether the inverter outlet temperature Tib is higher than the threshold temperature T1. If "NO", the ECU 42 proceeds to step 4 and switches the three-way valve 38 to the N position.

Subsequently, the ECU 42 proceeds to step 5 and determines whether the motor temperature Tm is higher than the threshold temperature T2. If "NO", the ECU 42 proceeds to step 6 and turns on or continues to operate the motor 16 as required to assist the turbo charge operation without limiting the supply of power to the motor 16. If "YES" in step 5, conversely, the ECU 42 proceeds to step 7 and turns off the motor 16 by stopping the power application from the inverter 36 to the motor 16 or maintains the stopped state of the motor 16.

Meanwhile, if "YES" in step 3, the ECU 42 proceeds to step 8 to switch the three-way valve 38 to the L position. After step 8, the ECU 42 determines in step 9 whether the motor temperature Tm is higher than the threshold temperature T2. If "YES", the ECU 42 proceeds to step 7. If "NO" in step 9, conversely, the ECU 42 proceeds to step 10 and turns on or continues to operate the motor 16 while limiting the supply of power to the motor 16 according to related thermal conditions.

Back to step 1, if the engine has been stopped ("YES" in step 1), the ECU 42 proceeds to step 11 and determines to continue the cooling operation. Subsequently, the ECU 42 determines in step 12 whether the inverter outlet temperature Tib is higher than the threshold temperature T1. If "YES", the ECU 42 proceeds to step 13 to switch the three-way valve 38 to the L position, and this condition is maintained until the inverter outlet temperature Tib becomes lower than the threshold temperature T1 ("NO" in step 12).

When "NO" in step 12, the ECU 42 proceeds to step 14 and determines whether the motor temperature Tm is higher than the threshold temperature T2. If "YES", the ECU 42 proceeds to step 15 to switch the three-way valve 38 to the N position, and this condition is maintained until the motor temperature Tm becomes lower than the threshold temperature T2 ("NO" in step 14).

If "NO" in step 14, the ECU 42 proceeds to step 16 and stops the cooling operation. Accordingly, steps 11 to 16 provide an additional cooling mode after engine stop.

While the invention has been described with reference to exemplary embodiments thereof, it is to be understood that the invention is not limited to the exemplary embodiments or constructions. To the contrary, the invention is intended to cover various modifications and equivalent arrangements other than described above. In addition, while the various elements of the exemplary embodiments are shown in various combinations and configurations, which are exemplary, other combinations and configurations, including more, less or only a single element, are also within the scope of the invention.

## Claims

1. A motor-assisted turbo charger (10) for an internal combustion engine that includes: a compressor (14) for compressing intake air; a motor (16) for driving the compressor (14); an inverter (36) for applying power to the motor (16); and a cooling apparatus (32, 34, 40) for cooling the motor (16) and the inverter (36), **characterized in that** said cooling apparatus (32, 34, 40) activates a first cooling mode in which one of the motor (16) and the inverter (36) is cooled and a second cooling mode in which the other or both of the motor (16) and the inverter (36) is cooled.

2. A motor-assisted turbo charger (10) according to claim 1, wherein
the cooling apparatus (32, 34, 40) includes a coolant passage (32) which extends through the motor (16) and the inverter (36) and in which a coolant is circulated; and
the cooling apparatus (32, 34, 40) activates the first cooling mode by establishing a first coolant path in which the coolant is circulated to the one of the inverter (36) and the motor (16) and activates the second cooling mode by establishing a second coolant path in which the coolant is circulated to the other or both of the motor (16) and the inverter (36).

3. A motor-assisted turbo charger (10) according to claim 2, wherein
the one of the motor (16) and the inverter (36) is the inverter (36); and
the other of the motor (16) and the inverter (36) is the motor (16).

4. A motor-assisted turbo charger (10) according to claim 3, wherein
the cooling apparatus (32, 34, 40) includes a pump (34) that is provided on the coolant passage (32) to enable the circulation of the coolant and a radiator (40) that is provided on the coolant passage (32) to cool the coolant,
establishment of the first coolant path causes the coolant to be circulated from the pump (34) to the inverter (36), and to the radiator (40) while bypassing the motor (16); and
establishment of the second coolant path causes the coolant to be circulated from the pump (34) to the inverter (36), to the motor (16), and to the radiator (40).

5. A motor-assisted turbo charger (10) according to claim 3 or 4, wherein
the cooling apparatus (32, 34, 40) switches between the first cooling mode and the second cooling mode based on an inverter temperature that represents or correlates with a temperature of the inverter (36).

6. A motor-assisted turbo charger (10) according to claim 5, wherein
the cooling apparatus (32, 34, 40) includes a coolant temperature sensor (44) that is provided on the coolant passage (32) downstream of a coolant outlet of the inverter (36) and detects a temperature of the coolant; and
the inverter temperature includes the temperature detected by the coolant temperature sensor (44).

7. A motor-assisted turbo charger (10) according to claim 5 or 6, wherein
the cooling apparatus (32, 34, 40) continues to operate after the internal combustion engine has been stopped if the inverter temperature is higher than a reference inverter temperature, wherein the first cooling mode is maintained until the inverter temperature decreases below the reference inverter temperature.

8. A motor-assisted turbo charger (10) according to any one of claims 3 to 7, wherein
the cooling apparatus (32, 34, 40) switches between the first cooling mode and the second cooling mode based on a motor temperature that represents or correlates with a temperature of the motor (16).

9. A motor-assisted turbo charger (10) according to claim 8, wherein
the cooling apparatus (32, 34, 40) includes a motor temperature sensor (46) that is provided in or in the vicinity of the motor (16) and detects a temperature of the motor (16); and
the motor temperature includes the temperature detected by the motor temperature sensor (46).

10. A motor-assisted turbo charger (10) according to claim 8 or 9, wherein
the cooling apparatus (32, 34, 40) continues to operate after the internal combustion engine has been stopped if the motor temperature is higher than a reference motor temperature, wherein the second cooling mode is maintained until the motor temperature decreases below the reference motor temperature.

11. A motor-assisted turbo charger (10) according to any one of claims 1 to 10, wherein
the power application from the inverter (36) to the motor (16) is stopped in response to a temperature of the motor (16) exceeding a predetermined level.

12. A motor-assisted turbo charger (10) according to any one of claims 1 to 11, wherein
the power application from the inverter (36) to the motor (16) is limited in response to a temperature of the inverter (36) exceeding a predetermined level.

13. A motor-assisted turbo charger (10) according to any one of claims 4 to 12, wherein
the radiator (40) includes an electric fan that operates as the pump (34) operates.

14. A motor-assisted turbo charger (10) according to any one of claims 2 to 13, wherein
the cooling apparatus (32, 34, 40) includes a valve (38) that is provided on the coolant passage (32); and
the cooling apparatus (32, 34, 40) switches between the first cooling path and the second cooling path using the valve (38).

15. A motor-assisted turbo charger (10) according to claim 1, wherein
the cooling apparatus (32, 34, 40) includes a coolant passage (32) which extends through the motor (16) and the inverter (36) and in which coolant is circulated.

16. A motor-assisted turbo charger (10) according to claim 15, wherein
the motor (16) is located downstream of the inverter (36) on the coolant passage (32).

17. A motor-assisted turbo charger (10) according to claim 15 or 16, wherein
the cooling apparatus (32, 34, 40) includes a valve (38) provided on the coolant passage (32) between the motor (16) and the inverter (36).

18. A motor-assisted turbo charger (10) according to claim 17, wherein
the valve (38) has a first valve position to cause the coolant to be circulated through one of the motor (16) and the inverter (36), and a second valve position to cause the coolant to be circulated through the other or both of the motor (16) and the inverter (36).

19. A motor-assisted turbo charger (10) according to any one of claims 15 to 18, wherein
the coolant passage (32) includes a bypass passage for bypassing one of the motor (16) and the inverter (36).

## Patentansprüche

1. Motorunterstützter Turbolader (10) für eine Brennkraftmaschine, der Folgendes hat:
einen Verdichter (14) zum Verdichten von Einlassluft;
einen Motor (16) zum Antreiben des Verdichters (14);
einen Inverter (36) zur Stromversorgung des Motors (16); und
ein Kühlgerät (32, 34, 40) zum Kühlen des Motors (16) und des Inverters (36),
**dadurch gekennzeichnet, dass**
das Kühlgerät (32, 34, 40) einen ersten Kühlmodus, in dem einer von dem Motor (16) und dem Inverter (36) gekühlt wird, und einen zweiten Kühlmodus aktiviert, in dem der andere oder beide von dem Motor (16) und dem Inverter (36) gekühlt wird/werden.

2. Motorunterstützter Turbolader (10) nach Anspruch 1, wobei
das Kühlgerät (32, 34, 40) eine Kühlmittelpassage (32) hat, die sich durch den Motor (16) und den Inverter (36) erstreckt und in der ein Kühlmittel zirkuliert wird; und
das Kühlgerät (32, 34, 40) den ersten Kühlmodus durch Einrichten eines ersten Kühlmittelwegs aktiviert, in dem das Kühlmittel zu dem einen von dem Inverter (36) und dem Motor (16) zirkuliert wird, und den zweiten Kühlmodus durch Einrichten eines zweiten Kühlmittelwegs aktiviert, in dem das Kühlmittel zu dem anderen oder zu beiden von dem Motor (16) und dem Inverter (36) zirkuliert wird.

3. Motorunterstützter Turbolader (10) nach Anspruch 2, wobei
der eine von dem Motor (16) und dem Inverter (36) der Inverter (36) ist; und
der andere von dem Motor (16) und dem Inverter (36) der Motor (16) ist.

4. Motorunterstützter Turbolader (10) nach Anspruch 3, wobei
das Kühlgerät (32, 34, 40) eine Pumpe (34), die an der Kühlmittelpassage (32) vorgesehen ist, um die Zirkulation des Kühlmittels zu ermöglichen, und einen Kühler (40) hat, der an der Kühlmittelpassage (32) vorgesehen ist, um das Kühlmittel zu kühlen,
ein Einrichten des ersten Kühlmittelwegs bewirkt, dass das Kühlmittel von der Pumpe (34) zu dem Inverter (36) und zu dem Kühler (40) zirkuliert wird, während es den Motor (16) umgeht; und
eine Einrichtung des zweiten Kühlmittelwegs bewirkt, dass das Kühlmittel von der Pumpe (34) zu dem Inverter (36), zu dem Motor (16) und zu dem Kühler (40) zirkuliert.

5. Motorunterstützter Turbolader (10) nach Anspruch 3 oder 4, wobei
das Kühlgerät (32, 34, 40) zwischen dem ersten Kühlmodus und dem zweiten Kühlmodus auf der Basis einer Invertertemperatur umschaltet, die eine Temperatur des Inverters (36) darstellt oder mit dieser in Beziehung steht.

6. Motorunterstützter Turbolader (10) nach Anspruch 5, wobei
das Kühlgerät (32, 34, 40) einen Kühlmitteltemperatursensor (44) hat, der an der Kühlmittelpassage (32) stromabwärts eines Kühlmittelauslasses des Inverters (36) vorgesehen ist und eine Temperatur des Kühlmittels erfasst; und
die Invertertemperatur die Temperatur beinhaltet, die durch den Kühlmitteltemperatursensor (44) erfasst wird.

7. Motorunterstützter Turbolader (10) nach Anspruch 5 oder 6, wobei
das Kühlgerät (32, 34, 40) einen Betrieb fortführt, nachdem die Brennkraftmaschine gestoppt worden ist, falls die Invertertemperatur höher als eine Referenzinvertertemperatur ist, wobei der erste Kühlmodus beibehalten wird, bis die Invertertemperatur unter die Referenzinvertertemperatur fällt.

8. Motorunterstützter Turbolader (10) nach einem der Ansprüche 3 bis 7, wobei
das Kühlgerät (32, 34, 40) zwischen dem ersten Kühlmodus und dem zweiten Kühlmodus auf der Basis einer Motortemperatur umschaltet, die eine Temperatur des Motors (16) darstellt oder mit dieser in Beziehung steht.

9. Motorunterstützter Turbolader (10) nach Anspruch 8, wobei
das Kühlgerät (32, 34, 40) einen Motortemperatursensor (46) hat, der in oder in der Nähe des Motors (16) vorgesehen ist und eine Temperatur des Motors (16) erfasst; und
die Motortemperatur die Temperatur beinhaltet, die durch den Motortemperatursensor (46) erfasst wird.

10. Motorunterstützter Turbolader (10) nach Anspruch 8 oder 9, wobei
das Kühlgerät (32, 34, 40) einen Betrieb fortführt, nachdem die Brennkraftmaschine gestoppt worden ist, falls die Motortemperatur höher als eine Referenzmotortemperatur ist, wobei der zweite Kühlmodus beibehalten wird, bis die Motortemperatur unter die Referenzmotortemperatur fällt.

11. Motorunterstützter Turbolader (10) nach einem der Ansprüche 1 bis 10, wobei
die Stromversorgung von dem Inverter (36) zu dem Motor (16) in Erwiderung darauf gestoppt wird, dass eine Temperatur des Motors (16) ein vorbestimmtes Niveau übersteigt.

12. Motorunterstützter Turbolader (10) nach einem der Ansprüche 1 bis 11, wobei
die Energiebeaufschlagung von dem Inverter (36) auf den Motor (16) in Erwiderung darauf begrenzt wird, dass eine Temperatur des Inverters (36) ein vorbestimmtes Niveau übersteigt.

13. Motorunterstützter Turbolader (10) nach einem der Ansprüche 4 bis 12, wobei
der Kühler (40) ein elektrisches Gebläse hat, das in Betrieb ist, wenn die Pumpe (34) in Betrieb ist.

14. Motorunterstützter Turbolader (10) nach einem der Ansprüche 2 bis 13, wobei
das Kühlgerät (32, 34, 40) ein Ventil (38) hat, das an der Kühlmittelpassage (32) vorgesehen ist; und
das Kühlgerät (32, 34, 40) unter Verwendung des Ventils (38) zwischen dem ersten Kühlweg und dem zweiten Kühlweg umschaltet.

15. Motorunterstützter Turbolader (10) nach Anspruch 1, wobei
das Kühlgerät (32, 34, 40) eine Kühlmittelpassage (32) hat, die sich durch den Motor (16) und den Inverter (36) erstreckt und in der ein Kühlmittel zirkuliert wird.

16. Motorunterstützter Turbolader (10) nach Anspruch 15, wobei
der Motor (16) stromabwärts des Inverters (36) an der Kühlmittelpassage (32) angeordnet ist.

17. Motorunterstützter Turbolader (10) nach Anspruch 15 oder 16, wobei
das Kühlgerät (32, 34, 40) ein Ventil (38) hat, das an der Kühlmittelpassage (32) zwischen dem Motor (16) und dem Inverter (36) vorgesehen ist.

18. Motorunterstützter Turbolader (10) nach Anspruch 17, wobei
das Ventil (38) eine erste Ventilstellung, um zu bewirken, dass das Kühlmittel durch einen von dem Motor (16) und dem Inverter (36) zirkuliert wird, und eine zweite Ventilstellung hat, um zu bewirken, dass das Kühlmittel durch den anderen oder durch beide von dem Motor (16) und dem Inverter (36) zirkuliert wird/werden.

19. Motorunterstützter Turbolader (10) nach einem der Ansprüche 15 bis 18, wobei die Kühlmittelpassage (32) eine Umgehungspassage zum Umgehen von einem von dem Motor (16) und dem Inverter (36) hat.

## Revendications

1. Turbocompresseur à assistance motorisée (10) pour un moteur à combustion interne, qui inclut : un compresseur (14) pour comprimer l'air admis ; un moteur (16) pour entraîner le compresseur (14) ; un inverseur (36) pour appliquer une puissance au moteur (16) ; et un appareil de refroidissement (32, 34, 40) pour refroidir le moteur (16) et l'inverseur (36), **caractérisé en ce que** ledit appareil de refroidissement (32, 34, 40) active un premier mode de refroidissement dans lequel un élément parmi le moteur (16) et l'inverseur (36) est refroidi et un second mode de refroidissement dans lequel l'autre élément parmi le moteur (16) et l'inverseur (36) ou les deux est/sont refroidi(s).

2. Turbocompresseur à assistance motorisée (10) selon la revendication 1, dans lequel :
l'appareil de refroidissement (32, 34, 40) inclut un passage à réfrigérant (32) qui s'étend à travers le moteur (16) et l'inverseur (36) et dans lequel un réfrigérant est mis en circulation ; et
l'appareil de refroidissement (32, 34, 40) active le premier mode de refroidissement en établissant un premier trajet de réfrigérant dans lequel le réfrigérant est mis en circulation vers l'un des éléments parmi l'inverseur (36) et le moteur (16) et active le second mode de refroidissement en établissant un second trajet de réfrigérant dans lequel le réfrigérant est mis en circulation vers l'autre élément parmi le moteur (16) et l'inverseur (36) ou les deux.

3. Turbocompresseur à assistance motorisée (10) selon la revendication 2, dans lequel l'élément considéré parmi le moteur (16) et l'inverseur (36) est l'inverseur (36) ; et l'autre élément parmi le moteur (16) et l'inverseur (36) est le moteur (16).

4. Turbocompresseur à assistance motorisée (10) selon la revendication 3, dans lequel :
l'appareil de refroidissement (32, 34, 40) inclut une pompe (34) qui est prévue dans le passage de réfrigérant (32) pour permettre la circulation du réfrigérant et un radiateur (40) qui est prévu dans le passage de réfrigérant (32) pour refroidir le réfrigérant,
le fait d'établir le premier trajet de réfrigérant amène le réfrigérant à circuler depuis la pompe (34) vers l'inverseur (36) et vers le radiateur (40) tout en by-passant le moteur (16) ; et
le fait d'établir le second trajet de réfrigérant amène le réfrigérant à circuler depuis la pompe (34) vers l'inverseur (36), vers le moteur (16), et vers le radiateur (40).

5. Turbocompresseur à assistance motorisée (10) selon la revendication 3 ou 4, dans lequel :
l'appareil de refroidissement (32, 34, 40) commute entre le premier mode de refroidissement et le second mode de refroidissement en se basant sur une température d'inverseur qui représente une température de l'inverseur (36) ou qui est en corrélation avec cette température.

6. Turbocompresseur à assistance motorisée (10) selon la revendication 5, dans lequel :
l'appareil de refroidissement (32, 34, 40) inclut un capteur de température de réfrigérant (44) qui est prévu dans le passage de réfrigérant (32) en aval d'une sortie de réfrigérant de l'inverseur (36) et qui détecte une température du réfrigérant ; et
la température d'inverseur inclut la température détectée par le capteur de température de réfrigérant (44).

7. Turbocompresseur à assistance motorisée (10) selon la revendication 5 ou 6, dans lequel :
l'appareil de refroidissement (32, 34, 40) continue à fonctionner après que le moteur à combustion interne soit arrêté si la température d'inverseur est supérieure à une température d'inverseur de référence, et le premier mode de refroidissement est maintenu jusqu'à ce que la température d'inverseur diminue au-dessus de la température d'inverseur de référence.

8. Turbocompresseur à assistance motorisée (10) selon l'une quelconque des revendications 3 à 7, dans lequel :
l'appareil de refroidissement (32, 34, 40) commute entre le premier mode de refroidissement et le second mode de refroidissement en se basant sur une température moteur qui représente une température du moteur (16) ou qui est en corrélation avec celle-ci.

9. Turbocompresseur à assistance motorisée (10) selon la revendication 8, dans lequel :
l'appareil de refroidissement (32, 34, 40) inclut un capteur de température moteur (46) qui est prévu dans le moteur (16) ou au voisinage de celui-ci et qui détecte une température du moteur (16) ; et
la température moteur inclut la température détectée par le capteur de température moteur (46).

10. Turbocompresseur à assistance motorisée (10) selon la revendication 8 ou 9, dans lequel :
l'appareil de refroidissement (32, 34, 40) continue à fonctionner après que le moteur à combustion interne soit arrêté si la température moteur est supérieure à une température moteur de référence, et le second mode de refroidissement est maintenu jusqu'à ce que la température moteur diminue au-dessous de la température moteur de référence.

11. Turbocompresseur à assistance motorisée (10) selon l'une quelconque des revendications 1 à 10, dans lequel :
l'application de puissance de l'inverseur (36) vers le moteur (16) est arrêtée en réponse à une température du moteur (16) qui dépasse un niveau prédéterminé.

12. Turbocompresseur à assistance motorisée (10) selon l'une quelconque des revendications 1 à 11, dans lequel :
l'application de puissance de l'inverseur (36) vers le moteur (16) est limitée en réponse à une température de l'inverseur (36) qui dépasse un niveau prédéterminé.

13. Turbocompresseur à assistance motorisée (10) selon l'une quelconque des revendications 4 à 12, dans lequel le radiateur (40) inclut un ventilateur électrique qui fonctionne lorsque la pompe (34) fonctionne.

14. Turbocompresseur à assistance motorisée (10) selon l'une quelconque des revendications 2 à 13, dans lequel :
l'appareil de refroidissement (32, 34, 40) inclut une valve (38) qui est prévue dans le passage de réfrigérant (32) ; et
l'appareil de refroidissement (32, 34,40) commute entre le premier trajet de réfrigérant et le second trajet de réfrigérant en utilisant la valve (38).

15. Turbocompresseur à assistance motorisée (10) selon la revendication 1, dans lequel :
l'appareil de refroidissement (32, 34, 40) inclut un passage de réfrigérant (32) qui s'étend à travers le moteur (16) et l'inverseur (36) et dans lequel un réfrigérant est mis en circulation.

16. Turbocompresseur à assistance motorisée (10) selon la revendication 15, dans lequel :
le moteur (16) est situé en aval de l'inverseur (36) dans le passage de réfrigérant (32).

17. Turbocompresseur à assistance motorisée (10) selon la revendication 15 ou 16, dans lequel :
l'appareil de refroidissement (32, 34, 40) inclut une valve (38) prévue dans le passage de réfrigérant (32) entre le moteur (16) et l'inverseur (36).

18. Turbocompresseur à assistance motorisée (10) selon la revendication 17, dans lequel :
la valve (38) présente une première position de valve pour amener le réfrigérant à circuler à travers l'un des éléments parmi le moteur (16) et l'inverseur (36), et une seconde position de valve pour amener le réfrigérant à circuler à travers l'autre des éléments parmi le moteur (16) et l'inverseur (36) ou les deux.

19. Turbocompresseur à assistance motorisée (10) selon l'une quelconque des revendications 15 à 18, dans lequel :
le passage de réfrigérant (32) inclut un passage de by-pass pour by-passer l'un des éléments parmi le moteur (16) et l'inverseur (36).
